# EUROPÄISCHE PATENTSCHRIFT

(11) **EP 1 124 118 B1**
(45) Veröffentlichungstag und Bekanntmachung des Hinweises auf die Patenterteilung: **05.07.2006**
(21) Anmeldenummer: 01103154.9
(22) Anmeldetag: 10.02.2001
(51) Int. Cl.: G01G 3/14, G01L 1/22

(54) **Wägevorrichtung**
Weighing apparatus
Dispositif de pesage

(30) Priorität: 10.02.2000 DE 10005766
(43) Veröffentlichungstag der Anmeldung: 16.08.2001
(73) Patentinhaber: Bizerba GmbH & Co. KG, D-72336 Balingen (DE)
(72) Erfinder: Selig, Klaus Peter, 72336 Balingen-Weilstetten (DE)
(74) Vertreter: Hoeger, Stellrecht & Partner Patentanwälte

(56) Entgegenhaltungen:
- EP-A- 0 800 064
- DE-B- 1 206 622
- PATENT ABSTRACTS OF JAPAN vol. 007, no. 184 (P-216), 13. August 1983 (1983-08-13) & JP 58 085127 A (KIYOUWA DENGIYOU:KK), 21. Mai 1983 (1983-05-21)
- PATENT ABSTRACTS OF JAPAN vol. 018, no. 333 (P-1759), 23. Juni 1994 (1994-06-23) & JP 06 082319 A (HITACHI CONSTR MACH CO LTD), 22. März 1994 (1994-03-22)
- PATENT ABSTRACTS OF JAPAN vol. 1997, no. 02, 28. Februar 1997 (1997-02-28) & JP 08 271357 A (SHOWA SOKKI:KK), 18. Oktober 1996 (1996-10-18)
- PATENT ABSTRACTS OF JAPAN vol. 1995, no. 08, 29. September 1995 (1995-09-29) & JP 07 128157 A (YAMATO SCALE CO LTD), 19. Mai 1995 (1995-05-19)
- PATENT ABSTRACTS OF JAPAN vol. 010, no. 344 (P-518), 20. November 1986 (1986-11-20) & JP 61 145426 A (HITACHI CONSTR MACH CO LTD), 3. Juli 1986 (1986-07-03)

## Beschreibung

Die Erfindung betrifft eine Wägevorrichtung mit einem Waagenrahmen, einen mit einem ersten Ende ortsfest am Waagenrahmen montierten Biegekraftaufnehmer, dessen zweites, freies Ende als Krafteinleitungsteil ausgebildet und mit dem ersten Ende über einen biegeelastischen Lenkerabschnitt verbunden ist, welcher einen quer zur Längsrichtung des Kraftaufnehmers verlaufenden, bezüglich einer horizontalen Ebene symmetrisch ausgebildeten Durchbruch, insbesondere eine zylindrische Bohrung, aufweist, und mit einer Sensoranordnung mit mindestens zwei symmetrisch zur horizontalen Symmetrieebene angeordneten Dehnungsmeßstreifen zur Umwandlung des aufgrund einer auf das Krafteinleitungsteil des Kraftaufnehmers wirkenden Gewichtskraft F hervorgerufenen Verformung desselben in ein elektrisches Wägesignal.

Die zuvor beschriebenen, in einer Wägevorrichtung einzubauenden Biegekraftaufnehmer werden vorzugsweise aus einem einstückigen, elastisch verformbaren Material wie Metall oder Keramik hergestellt und sind in verschiedenen Bauformen bekannt. Sie werden vorzugsweise in Industrie- und Laden-Waagen mit Wägebereichen kleiner als 5 t verwendet. Bei dieser Bauart wird im Bereich des Lenkerabschnitts aufgrund des quer zur Längsrichtung verlaufenden Durchbruchs durch die oben und unten verbleibenden Reststege, die biegeelastische Lenker bilden, eine Art Parallelogrammlenker erzielt, da sich das freie, steife Ende des Biegekraftaufnehmers beim Aufbringen einer Last quasi parallel zum gegenüberliegenden, ersten und starr am Waagenrahmen befestigten Ende bewegt.

Eine Wägevorrichtung mit einem Biegekraftaufnehmer der eingangs beschriebenen Art ist beispielsweise aus der DE-PS 12 06 622 bekannt. Hier wird ein Biegekraftaufnehmer in Balkenform mit einem rechteckigen Querschnitt verwendet, welcher einen Durchbruch von zylindrischer Gestalt aufweist. Die Dehnungsmeßstreifen sind paarweise symmetrisch zur vertikalen Mittelebene der Querbohrung an dessen zylindrischer Innenwand und/oder auf den ebenen oberen und unteren Außenflächen des Lenkerabschnitts, auch Federkörper genannt, angeordnet.

Biegekraftaufnehmer mit mehr als einem einzigen Durchbruch sind beispielsweise aus dem US-Patent 2,866,059 bekannt. Dort sind zwei zylindrische Bohrungen miteinander über einen Steg verbunden. Auch dort sind die Dehnungsmeßstreifen bezüglich der vertikalen Symmetrieebene des Durchbruches symmetrisch angeordnet.

Bei einstückiger Ausführung wird der Biegekraftaufnehmer häufig aus Edelstahl gefertigt. Dieser hat gegenüber anderen Materialien den Vorteil der besseren Korrosionsbeständigkeit, weist allerdings als entscheidenden Nachteil einen vergleichsweise großen Hysteresefehler auf.

Durch die Größe des Hysteresefehlers ist die Verwendbarkeit der entsprechenden Wägevorrichtungen mit Auflösungen größer als 3000 d, d. h. einer eichfähigen Anzahl von mehr als 3000 Teilungswerten, nicht möglich.

Auch 3000 d-Auflösungen sind nur mit einem Teil solcher Biegekraftaufnehmer erreichbar, indem diese bei der Herstellung selektiert werden.

Aufgabe der vorliegenden Erfindung ist es, eine Wägevorrichtung mit einem Biegekraftaufnehmer der vorbezeichneten Art so weiterzubilden, daß der Hysteresefehler vermindert und eine Auflösung von mehr als 3000 d möglich wird.

Diese Aufgabe wird bei der eingangs beschriebenen Wägevorrichtung erfindungsgemäß dadurch gelöst, daß die Dehnungsmeßstreifen der Sensoranordnung räumlich asymmetrisch zu einer quer zur Längsachse des Kraftaufnehmers verlaufenden vertikalen Symmetriebene des Durchbruchs und ausschließlich im Bereich des zum Krafteinleitungsteil weisenden Endes des Lenkerabschnitts angeordnet sind.

Anders ausgedrückt sind die Dehnungsmeßstreifen der Sensoranordnung bezüglich einer vertikalen, durch die Längsachse der Querbohrung (quer zur Längsachse des Biegekraftaufnehmens verlaufend) asymmetrisch angeordnet und zwar zum Krafteinleitungsteil hin orientiert.

Überraschenderweise ergibt sich durch die asymmetrische Anordnung der Dehnungsmeßstreifen an dem zum Krafteinleitungsteil weisenden Ende des Lenkerabschnitts ein erheblich verminderter Hysteresefehler bei der Messung.

Aus der JP-7-35601 A ist ebenfalls ein Biegekraftaufnehmer bekannt, bei dem ähnlich wie bei der Lösung des US-Patents 2,866,059 zwei zylindrische Bohrungen als Durchbrüche über einen Steg zu einem zusammenhängenden Hohlraum verbunden sind. Abgesehen davon, daß dieser Biegekraftaufnehmer zwei Durchbrüche aufweist, statt einen einzigen, sind dort die Dehnungsmeßstreifen auf Seiten des Befestigungsteils angeordnet. Bei einer solchen Anordnung wird der Hystereseeffekt noch verstärkt und der erfindungsgemäße Effekt nicht erreicht.

Die mit der vorliegenden Erfindung erzielbaren Vorteile liegen insbesondere darin, daß infolge der asymmetrischen Anordnung der Dehnungsmeßstreifen in Bezug auf den Lenkerabschnitt der Hysteresefehler entscheidend verkleinert wird, so daß der erfindungsgemäß in der Wägevorrichtung verwendete Biegekraftaufnehmer im Vergleich mit dem aus dem Stand der Technik bekannten mit einer symmetrischen Dehnmeßstreifenanordnung mehr als die doppelte Zahl von Teilungswerten, beispielsweise mehr als 6000 d, erreichen kann.

Wichtig ist in jedem Fall, daß die Dehnungsmeßstreifen, wie oben definiert, im Bereich des Endes des Lenkerabschnitts angeordnet werden, welches benachbart zum Krafteinleitungsteil angeordnet ist.

Die Dehnungsmeßstreifen werden dabei sinnvollerweise an den Stellen des Lenkerabschnitts angeordnet, an denen bei Krafteinleitung eine maximale Verformung auftritt. Diese Stellen sind die sogenannten elastischen Gelenkstellen des Lenkers, und hier wird durch die Dehnungsmeßstreifen ein maximales elektrisches Signal erzeugt.

Eine der bevorzugten Stellen zur Plazierung der Dehnungsmeßstreifen der Sensoranordnung ist die Innenwandung der Bohrung. Alternativ können auch die Dehnungsmeßstreifen an der Außenoberfläche des Kraftaufnehmers angeordnet werden, wobei die Anordnung an der Innenwandung allerdings den Vorteil hat, daß die Dehnungsmeßstreifen hier gegen äußere Einflüsse mechanischer Art besser zu schützen sind.

Die Anbringung der Dehnungsmeßstreifen an den Außenoberflächen des Biegekraftaufnehmers hat den Vorteil, daß sie einfacher angebracht und verdrahtet werden können.

Bevorzugt wird eine zylindrische Querbohrung als Durchbruch verwendet oder ein Durchbruch, der im Querschnitt nur wenig davon abweicht und eine Langlochform aufweist. Die zylindrische Querbohrung als Durchbruch hat den Vorteil, daß sie gegenüber einem Querdurchbruch, der von der kreisrunden Form abweicht, einfacher und damit kostengünstiger hergestellt werden kann. Außerdem lassen sich zylindrische Querbohrungen mit einfachen Mitteln seitlich verschließen bzw. abdichten und somit die gegebenenfalls an der Innenwandung der Querbohrung angeordneten, feuchtigkeitsempfindlichen Dehnungsmeßstreifen besser schützen. Dies bedeutet, daß eine Wägevorrichtung mit einem Biegekraftaufnehmer dieser Bauart auch bei ungünstigen Umgebungseinflüssen verwendet werden kann.

Bevorzugt werden die Dehnungsmeßstreifen mit gleichem Abstand zur horizontalen Symmetrieebene angeordnet. Dies läßt eine besonders einfache Auswertung der Signale der Dehnungsmeßstreifen zu. Gleichzeitig ist es sinnvoll, die Dehnungsmeßstreifen der Sensoranordnung symmetrisch zur Längsachse des Biegekraftaufnehmers anzuordnen.

Eine besonders bevorzugte Ausführungsform beinhaltet die Dehnungsmeßstreifen der Sensoranordnung einschließlich elektrischer Leiterbahnen auf einer gemeinsamen, flexiblen Leiterfolie aufgedruckt und als eine Einheit an der Innenwandung des Durchbruchs befestigt.

Bevorzugt werden dabei vier Dehnungsmeßstreifen für die Sensoranordnung verwendet, welche auf der Leiterfolie zu einer Wheatstone-Vollbrücke verschaltet sind.

Alternativ kann eine Sensoranordnung auch mit zwei Meßstreifen verwendet werden, wobei diese um zwei passive Festwiderstände ergänzt werden und so zu einer Wheatstone-Brücke verschaltet sind. Auch hier können die Schaltelemente (DMS und Festwiderstände) auf einer gemeinsamen Leiterfolie integriert werden.

Die Ausführungsform mit nur zwei Dehnungsmeßstreifen ist gegenüber der Verwendung von vier Dehnungsmeßstreifen kostengünstiger herzustellen, wobei allerdings eine etwas geringere Auflösung bei der Gewichtsmessung in Kauf zu nehmen ist.

Der gemeinsame Aufdruck der Dehnungsmeßstreifenelemente und der Leiterbahnen auf die Leiterfolie reduziert die Anzahl der elektrischen Leitungsverbindungen zum Biegekraftaufnehmer, und außerdem ist die Aufbringung der vier Dehnungsmeßstreifen auf dem Federkörper in einer einzigen Baugruppe vereinfacht.

Diese und weitere Vorteile der Erfindung werden im folgenden anhand der Beschreibung und der Zeichnung noch näher erläutert. Es zeigen im einzelnen:
- Fig. 1: eine Vorderansicht eines erfindungsgemäßen Biegekraftaufnehmers;
- Fig. 2: eine Draufsicht des erfindungsgemäßen Biegekraftaufnehmers aus Fig. 1;
- Fig. 3: eine Schnittdarstellung längs der Linie A-A in Fig. 1;
- Fig. 4: eine Brückenschaltung für die Dehnungsmeßstreifen-Anordnung nach Fig. 1 bis 3;
- Fig. 5: eine Dehnmeßstreifen-Baugruppe auf einer Leiterfolie;
- Fig. 6: eine Schnittdarstellung entsprechend Fig. 3 in einer abgewandelten zweiten Ausführungsform;
- Fig. 7: eine Brückenschaltung für die Dehnungsmeßstreifen-Anordnung nach Fig. 5;
- Fig. 8: eine Vorderansicht eines erfindungsgemäßen Biegekraftaufnehmers gemäß einer dritten Ausführungsform;
- Fig. 9: eine Vorderansicht einer vierten Ausführungsform eines erfindungsgemäßen Biegekraftaufnehmers; und
- Fig. 10: eine Seitenansicht des Biegekraftaufnehmers in Fig. 8 in Pfeilrichtung "X".

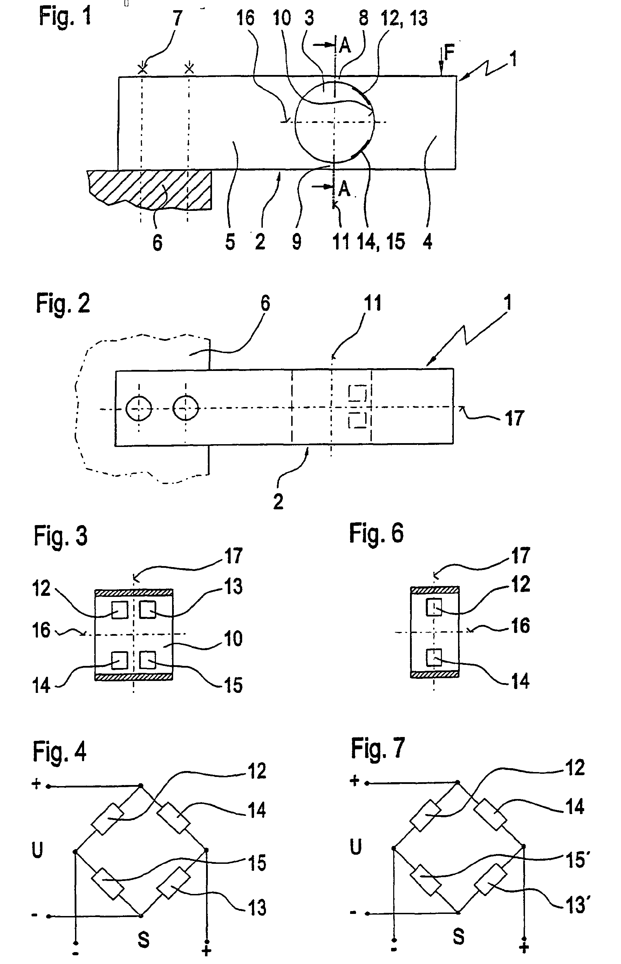

Die Figuren 1 bis 3 zeigen schematisch einen Biegekraftaufnehmer 1 in Form eines Biegebalkens mit einem biegeelastisch verformbaren Lenkerabschnitt 2, der eine durchgehende, zylindrische Querbohrung 3 als Durchbruch aufweist. Der Biegekraftaufnehmer umfaßt an seinem freien Ende einen relativ steifen Krafteinleitungsteil 4, in den eine zu messende Kraft F, beispielsweise eine Gewichtskraft, eingeleitet werden kann. Mit einem ebenfalls relativ steifen Befestigungsteil 5 am ersten Ende des Biegekraftaufnehmers 1 ist dieser stationär an der ortsfesten Basis oder dem Waagenrahmen 6 mittels zwei Schrauben 7 befestigt. Die Basis 6 ist so abgesetzt, daß der größte Teil des Biegekraftaufnehmers 1 mit dem Lenkerabschnitt 2 und dem Krafteinleitungsteil 4 frei absteht.

Die ober- und unterhalb der Querbohrung verbleibenden horizontalen Reststege des im Bereich des Lenkerabschnitts 2 bilden biegeelastische Lenker 8, 9. Die gesamte Anordnung bildet auf diese Weise einen Parallelogrammlenker an sich bekannter Art.

Wird eine Kraft F vertikal in den Krafteinleitungsteil 4 des Biegekraftaufnehmers 1 eingeleitet, so bewegt sich dieses infolge seiner Anbindung an den ortsfesten Befestigungsteil 5 über die biegeelastischen Lenker 8, 9 annähernd parallel zum Befestigungsteil 5 nach unten. An der Innenwandung 10 der Querbohrung 3 sind, wie aus Figur 1 und 3 ersichtlich, vier Dehnungsmeßstreifen-Elemente (DMS) 12 bis 15 asymmetrisch zu einer vertikalen Symmetrieebene 11 der Querbohrung 3 auf der Seite des Krafteinleitungsteils 4 angeordnet. Die Plazierung der DMS zur horizontalen Symmetrieebene 16 der Querbohrung 3 ist symmetrisch. Je zwei DMS 12, 13 liegen oberhalb und zwei DMS 14, 15 unterhalb im gleichen Abstand zur Symmetrieebene 16.

Die Plazierung der DMS zur vertikalen Symmetrieebene 17 bezüglich der Längsachse des Biegekraftaufnehmers 1 ist ebenfalls symmetrisch. Je zwei DMS 12, 14 und 13, 15 sind beiderseits der Längsachse im gleichen Abstand angeordnet.

Diese erfindungsgemäße asymmetrische Anordnung der DMS zur vertikalen Symmetrieebene 11 der Querbohrung 3 bedingt den Vorteil eines sehr kleinen Hysteresefehlers. Dies resultiert daraus, daß der gesamte Hysteresefehler des Biegekraftaufnehmers 1 eine Überlagerung des lokalen Hystereseverhaltens an den Punkten der DMS-Positionen ist.

Die Anordnung der Dehnungsmeßstreifen 12 bis 15 in den bekannten Biegekraftaufnehmern dieser Bauart ist räumlich gesehen symmetrisch zur vertikalen Symmetrieebene 11 der Querbohrung 3. Eine solche Symmetrie findet sich jedoch keinesfalls für die lokalen Dehnungen an den Orten der Dehnungsmeßstreifen. Der Grund hierfür liegt bei Aufnehmern der genannten Bauart in der Lage der Krafteinleitung, die in Längsrichtung des Biegekraftaufnehmers bezüglich der Position der Dehnungsmeßstreifen verschoben ist.

Mit der erfindungsgemäßen räumlichen asymmetrischen Anordnung der DMS 12 bis 15 an der Querbohrungswandung 10 bezüglich der vertikalen Symmetrieebene 11 ist es möglich, den Hysteresefehler entscheidend zu reduzieren. Dies ist damit zu erklären, daß die Dehnung der DMS 12 bis 15 bei der beschriebenen Plazierung nun symmetrisch wird und im Zusammenwirken mit den Eigenschaften der Wheatstone-Brückenschaltung der Hysteresefehler minimiert wird.

Die vier DMS 12 bis 15 sind, wie in Figur 4 vereinfacht dargestellt, in an sich bekannter Weise zu einer Wheatstone-Vollbrücke verschaltet. Über eine Spannungsquelle U werden die beiden Brückenseiten mit den DMS-Widerstandselementen 12, 13 bzw. 14, 15 an Spannung gelegt. Bei Belastung des Biegekraftaufnehmers 1 mit einer Gewichtskraft F wird ein gewichtsproportionales Ausgangssignal S erzeugt, das in bekannter Weise über eine nicht dargestellte Auswerteschaltung mit Analog-Digitalwandler in einen digitalen Gewichtswert umgewandelt wird.

Die elektrische Verbindung von den DMS 12 bis 15 zu der üblicherweise außerhalb des Biegekraftaufnehmers 1 liegenden Spannungsversorgung und Auswerteschaltung wird in bekannter Weise durch eine nicht dargestellte Durchführung durch den Befestigungsteil 5 vorgenommen. Bei den vier einzeln am Lenkerabschnitt befestigten DMS-Elementen ist dazu ein achtadriges Verbindungskabel erforderlich, oder es sind zusätzliche Verdrahtungselemente in unmittelbarer Nähe der DMS vorzusehen.

Figur 5 stellt eine Lösungsvariante dar, bei der die vier DMS 12 bis 15 zu einer Einheit zusammengefaßt und auf einer gemeinsamen, flexiblen Leiterfolie 18 aufgebracht sind, die dann als eine Baugruppe an der Innenwandung 10 der Querbohrung 3 befestigt wird. Auf der Leiterfolie 18 sind mit den DMS gleichzeitig nicht dargestellte Leiterbahnen aufgedruckt. Bei dieser Variante ist nur noch ein vieradriges Verbindungskabel zur Auswerteschaltung und Stromversorgung erforderlich. Außerdem wird die Aufbringung der vier DMS auf den Lenkerabschnitt vereinfacht.

In Figur 6 ist eine abgewandelte zweite Ausführungsform dargestellt. Im Gegensatz zu der gemäß Figur 1 bis 3 beschriebenen ersten Ausführungsform sind bei dieser "abgemagerten" Version nur zwei DMS 12, 14 am Lenkerabschnitt 2 befestigt. Die räumliche Anordnung der DMS 12, 14 ist wie bei Figur 1 erfindungsgemäß asymmetrisch zur vertikalen Symmetrieebene 11 der Querbohrung 3 auf der Krafteinleitungsteilseite 4. Die Anordnung zur horizontalen Symmetrieebene 16 der Querbohrung 3 ist symmetrisch. Da aber nur zwei DMS 12, 14 verwendet werden, sind diese symmetrisch zur Längsachse des Biegekraftaufnehmers 1 plaziert, welcher in der Symmetrieebene 17 liegt.

Die Schaltungsanordnung der zweiten Ausführungsform nach Figur 7 unterscheidet sich von der ersten Ausführungsform nach Figur 4 nur dadurch, daß anstelle der aktiven DMS-Widerstandselemente 13, 15 zwei passive Festwiderstände 13', 15' verwendet werden. Die zweite Ausführungsform ist dadurch kostengünstiger herstellbar. Die erreichbare eichfähige Anzahl von Teilungswerten liegt aber nicht ganz so hoch wie bei der ersten Ausführungsform.

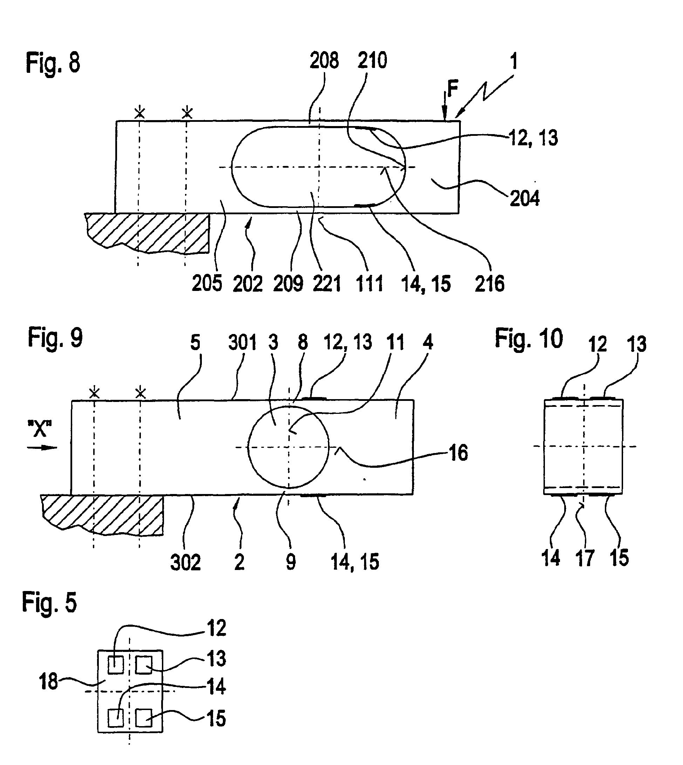

Eine dritte Ausführungsform eines erfindungsgemäßen Biegekraftaufnehmers nach Figur 8 weist einen Querdurchbruch 221 auf, der langlochförmig ausgebildet ist. Oben und unten bleiben dünne, zu den Außenflächen des Federkörpers 202 parallele Reststege als biegeelastische Lenker 208, 209 stehen. Die vier DMS 12 bis 15 sind symmetrisch zu der horizontalen Ebene 216 und asymmetrisch zur vertikalen Symmetrieebene 111 des Querdurchbruchs 221, d. h. benachbart zu der Krafteinleitungsseite 204 des Lenkerabschnitts 202, an dessen Innenwandung 210 in der gleichen Weise wie bei der dritten Ausführungsform angeordnet. Die Plazierung der DMS ist ähnlich wie in Figur 3 oder für eine mögliche Sparvariante mit zwei DMS ähnlich der Figur 6.

Eine weitere vierte Ausführungsform eines erfindungsgemäßen Biegekraftaufnehmers ist in den Figuren 9 und 10 dargestellt. Der Lenkerabschnitt 2 ist identisch mit dem der ersten Ausführungsform. Die vier DMS 12 bis 15 sind jedoch nicht an der Innenwandung der Querbohrung 3, sondern je zwei DMS 12, 13 an der oberen ebenen Außenfläche 301 und zwei DMS 14, 15 an der unteren Außenfläche 302 des Federkörpers 2 so angeordnet, daß sie asymmetrisch zur vertikalen Symmetrieebene 11 der Querbohrung 3 mit jeweils gleichem Abstand zur Symmetrieebene im Bereich zunehmender Dicke der Lenker 8, 9 auf der Krafteinleitungsseite 4 des Lenkerabschnitts 2 liegen. Bezogen auf die vertikale Symmetrieebene 17 in der Längsachse des Lenkerabschnitts 2 sind alle vier DMS 12 bis 15 im gleichen Abstand angeordnet.

## Patentansprüche

1. Wägevorrichtung mit einem Waagenrahmen (6), einem mit einem ersten Ende ortsfest am Waagenrahmen (6) montierten Biegekraftaufnehmer (1), dessen zweites, freies Ende als Krafteinleitungsteil (4; 204) ausgebildet ist und mit dem ersten Ende über einen biegeelastischen Lenkerabschnitt (2; 202) verbunden ist, welcher einen einzigen quer zur Längsrichtung des Kraftaufnehmers (1) verlaufenden, bezüglich einer horizontalen Ebene (16; 216) symmetrisch ausgebildeten Durchbruch (3; 221) aufweist, und mit einer Sensoranordnung mit mindestens zwei symmetrisch zu der horizontalen Symmetrieebene (16; 216) angeordnete Dehnungsmeßstreifen (12, 13, 14, 15) zur Umwandlung der aufgrund einer auf das Krafteinleitungsteil des Kraftaufnehmers (1) wirkenden Gewichtskraft F hervorgerufenen Verformung desselben in ein elektrisches Wägesignal,
**dadurch gekennzeichnet, daß**
die Dehnungsmeßstreifen (12, 13, 14, 15) der Sensoranordnung räumlich asymmetrisch zu einer quer zur Längsachse des Kraftaufnehmers verlaufenden vertikalen Symmetrieebene des Durchbruchs und ausschließlich im Bereich des zum Krafteinleitungsteil (4; 204) weisenden Endes des Lenkerabschnitts (2; 202) angeordnet sind.

2. Wägevorrichtung nach Anspruch 1, **dadurch gekennzeichnet, daß** der Durchbruch (3) eine im wesentlichen zylindrische Bohrung ist.

3. Wägevorrichtung nach Anspruch 1 oder 2, **dadurch gekennzeichnet, daß** die Dehnungsmeßstreifen (12, 13, 14, 15) der Sensoranordnung an der Innenwandung (10; 210) des Durchbruchs (3; 221) angeordnet sind.

4. Wägevorrichtung nach Anspruch 1 oder 2, **dadurch gekennzeichnet, daß** die Dehnungsmeßstreifen (12, 13, 14, 15) der Sensoranordnung an Außenoberflächen (301, 302) des Kraftaufnehmers (1) angeordnet sind.

5. Wägevorrichtung nach einem der Ansprüche 1 bis 4, **dadurch gekennzeichnet, daß** die Dehnungsmeßstreifen (12, 13, 14, 15) mit gleichem Abstand zur horizontalen Symmetrieebene (16) angeordnet sind.

6. Wägevorrichtung nach einem der Ansprüche 1 bis 5, **dadurch gekennzeichnet, daß** die Dehnungsmeßstreifen (12, 13, 14, 15) der Sensoranordnung einschließlich von elektrischen Leiterbahnen auf einer gemeinsamen, flexiblen Leiterfolie (18) aufgedruckt und als eine Einheit an der Innenwandung (10; 210) des Durchbruchs (3; 221) befestigt sind.

7. Wägevorrichtung nach Anspruch 6, **dadurch gekennzeichnet, daß** die Sensoranordnung vier Dehnungsmeßstreifen (12, 13, 14, 15) umfaßt, welche auf der Leiterfolie (18) zu einer Wheatstone-Vollbrücke verschaltet sind.

8. Wägevorrichtung nach einem der Ansprüche 1 bis 7, **dadurch gekennzeichnet, daß** die Dehnungsmeßstreifen (12, 13, 14, 15) der Sensoranordnung symmetrisch zur Längsachse des Biegekraftaufnehmers (1) angeordnet sind.

9. Wägevorrichtung nach Anspruch 8, **dadurch gekennzeichnet, daß** die Sensoranordnung zwei Dehnungsmeßstreifen (12, 14) umfaßt, welche um zwei passive Festwiderstände (13', 15') ergänzt und zu einer Wheatstonebrücke verschaltet sind.

## Claims

1. A weighing machine having a machine frame (6), a bending force transducer (1) mounted by a first end in fixed manner to the machine frame (6), the second free end of which is constructed as a force transmission part (4; 204) and is connected to the first end via a flexibly elastic guide portion (2; 202), which comprises a single aperture (3; 221) that runs at right angles to the longitudinal direction of the force transducer (1) and is constructed symmetrically in relation to a horizontal plane (16; 216), and having a sensor assembly having at least two strain gauges (12, 13, 14, 15) disposed symmetrically to the horizontal plane of symmetry (16; 216) for converting the deformation of the force transducer that is caused as a result of a weight force F acting on the force transmission part of the force transducer into an electric weighing signal,
**characterised in that** the strain gauges (23, 13, 14, 15) of the sensor assembly are arranged with spatial asymmetry relative to a vertical plane of symmetry of the aperture that runs at right angles to the longitudinal axis of the force transducer and exclusively in the vicinity of the end of the guide portion (23; 202) pointing towards the force transmission part (4; 204).

2. A weighing machine according to Claim 1,
**characterised in that** the aperture (3) is a substantially cylindrical hole.

3. A weighing machine according to Claim 1 or 2,
**characterised in that** the strain gauges (12, 13, 14, 15) of the sensor assembly are disposed on the inner wall (10; 210) of the aperture (3; 221).

4. A weighing machine according to Claim 1 or 2,
**characterised in that** the strain gauges (12, 13, 14, 15) of the sensor assembly are disposed on outer surfaces (301, 302) of the force transducer (1).

5. A weighing machine according to one of Claims 1 to 4,
**characterised in that** the strain gauges (12, 13, 14, 15) are disposed with equal spacing to the horizontal plane of symmetry (16).

6. A weighing machine according to one of Claims 1 to 5,
**characterised in that** the strain gauges (12, 13, 14, 15) of the sensor assembly including electric track conductors are imprinted on a common, flexible conductor foil (18) and are fixed as a unit on the inner wall (10; 210) of the aperture (3; 221).

7. A weighing machine according to Claim 6,
**characterised in that** the sensor assembly comprises four strain gauges (12, 13, 14, 15) which are wired on the conductor foil (18) to a full Wheatstone bridge.

8. A weighing machine according to one of Claims 1 to 7,
**characterised in that** the strain gauges (12, 13, 14, 15) of the sensor assembly are disposed symmetrically to the longitudinal axis of the bending force transducer (1).

9. A weighing machine according to Claim 8,
**characterised in that** the sensor assembly comprises two strain gauges (12, 14) which are supplemented by two passive fixed resistors (13', 15') and are wired to a Wheatstone bridge.

## Revendications

1. Balance munie d'un châssis (6), d'un capteur d'effort à la flexion (1) monté fixe sur le châssis (6) avec une première extrémité, dont la seconde extrémité libre est réalisée sous la forme d'une partie de transmission des forces (4 ; 204) et est reliée à la première extrémité par l'intermédiaire d'un tronçon de manche élastique à la flexion (2 ; 202), qui présente un unique orifice (3 ; 221) réalisé symétriquement par rapport à un plan horizontal (16; 216) s'étendant transversalement à la direction longitudinale du capteur d'effort à la flexion (1), et d'un dispositif de capteur avec au moins deux jauges de contrainte (12, 13, 14, 15) disposées symétriquement par rapport au plan de symétrie horizontal (16 ; 216) en vue de la conversion d'une déformation du capteur d'effort à la flexion provoquée par un poids F agissant sur la partie de transmissions des forces du capteur d'effort à la flexion (1) dans un signal de pesage,
**caractérisée en ce que**
les jauges de contrainte (12, 13, 14, 15) du dispositif de capteur sont disposées spatialement asymétriquement par rapport à un plan de symétrie vertical de l'orifice s'étendant transversalement à l'axe longitudinal du capteur d'effort de flexion et exclusivement dans la zone de l'extrémité du tronçon de manche (2 ; 202) allant vers la partie de transmission des forces (4 ; 204).

2. Balance selon la revendication 1, **caractérisée en ce que** l'orifice (3) est un trou sensiblement cylindrique.

3. Balance selon la revendication 1 ou 2, **caractérisée en ce que** les jauges de contrainte (12, 13, 14, 15) du dispositif de capteur sont disposées sur la paroi interne (10 ; 210) de l'orifice (3 ; 221).

4. Balance selon la revendication 1 ou 2, **caractérisée en ce que** les jauges de contrainte (12, 13, 14, 15) du dispositif de capteur sont disposées sur les surfaces externes (301, 302) du capteur d'effort à la flexion (1).

5. Balance selon l'une des revendications 1 à 4, **caractérisée en ce que** les jauges de contrainte (12, 13, 14, 15) sont disposées à la même distance du plan de symétrie horizontal (16).

6. Balance selon l'une des revendications 1 à 5, **caractérisée en ce que** les jauges de contrainte (12, 13, 14, 15) du dispositif de capteur sont appliquées sur une feuille conductrice flexible commune (18) y compris par des pistes conductrices et sont fixées en tant qu'unité sur la paroi interne (10 ; 210) de l'orifice (3 ; 221).

7. Balance selon la revendication 6, **caractérisée en ce que** le dispositif de capteur comprend quatre jauges de contrainte (12, 13, 14, 15), qui sont reliées sur la feuille conductrice (18) à un pont de Wheatstone.

8. Balance selon l'une des revendications 1 à 7, **caractérisée en ce que** les jauges de contrainte (12, 13, 14, 15) du dispositif de capteur sont disposées symétriquement par rapport à l'axe longitudinal du capteur d'effort à la flexion (1).

9. Balance selon la revendication 8, **caractérisée en ce que** le dispositif de capteur comprend deux jauges de contrainte (12, 14), qui sont complétées de deux résistances fixes passives (13', 15') et sont reliées à un pont de Wheatstone.
